# EUROPÄISCHE PATENTSCHRIFT

(11) **EP 2 492 046 B1**
(45) Veröffentlichungstag und Bekanntmachung des Hinweises auf die Patenterteilung: **26.06.2013**
(21) Anmeldenummer: 11155297.2
(22) Anmeldetag: 22.02.2011
(51) Int. Cl.: B23Q 1/76, B23Q 11/00, B23Q 11/10

(54) **Verfahren zur Bearbeitung eines Bauteils**
Method for processing a component
Procédé de traitement d'un composant

(43) Veröffentlichungstag der Anmeldung: 29.08.2012
(73) Patentinhaber: MTU Aero Engines GmbH, 80995 München (DE)
(72) Erfinder: Eckstein, Martin, 82178 Puchheim (DE); Breitkopf, Ruth, 80638 München (DE); Breitkopf, Günter, Dr., 80638 München (DE)

(56) Entgegenhaltungen:
- EP-A1- 1 564 135
- WO-A1-2008/106676
- FR-A1- 2 861 326
- JP-A- 58 160 058

## Beschreibung

Die vorliegende Erfindung betrifft ein Verfahren zur Bearbeitung eines Bauteils, insbesondere einer Turbomaschine, wobei durch die Bearbeitung eine Deformationskraft auf das Bauteil ausgeübt wird, und wobei das Bauteil, ein das Bauteil bearbeitendes Werkzeug und/oder eine Halteeinrichtung zum Halten des Bauteils und/oder des Werkzeugs während der Bearbeitung mit einem Fluid beaufschlagt wird.

Insbesondere bei der spanenden Bearbeitung von Bauteilen mit geringer Formsteifigkeit in Richtung einer Deformationskraft, die durch ein Werkzeug auf das Bauteil ausgeübt wird, etwa dem Drehen dünnwandiger Flugtriebwerksrotorteile, können verschiedene Probleme auftreten: das Bauteil kann infolge seiner geringen Formsteifigkeit bei der Bearbeitung elastisch ausweichen und so die Bearbeitung, insbesondere dabei erzielte Maßabweichungen und auftretende Schnittbedingungen, beeinträchtigen. Zusätzlich oder alternativ zu einem solchen in der Regel quasi-stationären Ausweichen können auch Schwingungsanregungen, insbesondere bei niedrigeren Eigenfrequenzen und geringeren Dämpfungen von Bauteilen mit geringer Steifigkeit, die Bearbeitung beeinträchtigen.

Hierzu ist es aus betriebsinterner Praxis bekannt, solche Bauteile durch entsprechend geformte Adapter abzustützen. Diese müssen jedoch an das jeweilige Bauteil angepasst sein, so dass ihre Bereitstellung und Anwendung den Fertigungsablauf beeinträchtigt.

Unabhängig hiervon ist es, insbesondere bei schneidender oder spanender Bearbeitung, bekannt, einen Kühl- und Schmierstoff ("KSS") zur Gewährleistung oder Verbesserung der Spanabfuhr, zur Begrenzung thermischer Einflüsse auf den Werkstückstoff oder dergleichen zuzuführen. Diese Fluidbeaufschlagung wird nach Art, Menge, Druck und Applikationsart bisher entsprechend unter thermischen Gesichtspunkten zur Einstellung einer gewünschten Temperierung in der Schneidezone sowie gegebenenfalls unter Berücksichtigung einer gewünschten Spanabfuhr so vorgegeben, dass möglichst geringe Fluidkräfte auf das Bauteil und das Werkzeug ausgeübt werden und so den Bearbeitungsprozess möglichst wenig beeinflussen.

Aus der JP 58 160058 A ist eine automatische Auswuchtvorrichtung für einen sich drehenden Schleifstein bekannt,

wobei die Unwucht des Schleifsteins durch Fluidbeaufschlagung kompensiert wird.

Aus der EP-1564135A ist ein Bearbeitungsverfahren bekannt, wobei ein bewegliches Abstützelement eine Kraft auf das zu bearbeitende Bauteil ausübt, um eine Deformation des Bauteils durch eine Bearbeitungskraft entgegenzuwirken.

WO-2008/106676 offenbart ein Verfahren nach dem Oberbegriff des Anspruchs 1 mit einer automatisch orientierbaren Kühlflüssigkeitsdüse zum Kühlen des Bauteils oder des Werkzeugs.

Aufgabe der vorliegenden Erfindung ist es, die Bearbeitung von Bauteilen zu verbessern.

Zur Lösung dieser Aufgabe ist ein Verfahren nach dem Oberbegriff des Anspruchs 1 durch dessen kennzeichnende Merkmale weitergebildet. Die Unteransprüche betreffen vorteilhafte Weiterbildungen.

Bei einem erfindungsgemäßen Verfahren zur Bearbeitung eines Bauteils, insbesondere einer Turbomaschine, vorzugsweise eines Rotors einer Gasturbine, insbesondere eines Flugtriebwerkes, beispielsweise einer Laufschaufel, wird durch die Bearbeitung eine Deformationskraft auf das Bauteil ausgeübt. Zur kompakteren Darstellung wird vorliegend auch ein antiparalleles Kräftepaar, d.h. ein Drehmoment, verallgemeinernd als Kraft bezeichnet. Eine Deformationskraft kann also beispielsweise ein Biegemoment sein, welches das Bauteil zu deformieren bzw. verformen sucht. Allgemein wird als Deformationskraft im Sinne der vorliegenden Erfindung insbesondere eine Kraft (bzw. ein Drehmoment) bezeichnet, welche bei der Bearbeitung des Bauteils auf das Bauteil wirkt und dieses zu deformieren sucht.

Eine solche Deformationskraft kann insbesondere, direkt oder indirekt, durch ein das Bauteil bearbeitendes Werkzeug auf das Bauteil aufgeprägt werden, beispielsweise direkt durch eine spanabhebende Schneide eines Drehstahls oder Fräskopfes, indirekt durch den Wasserstrahl einer Wasserstrahl-Schneideinrichtung, oder auch, insbesondere als Gegen- bzw. Reaktionskraft, durch eine das Bauteil haltende Halteeinrichtung. Mehrere auf das Bauteil wirkende Kräfte, beispielsweise eine durch ein Werkzeug aufgeprägte Bearbeitungs- und eine daraus resultierende, von einer Halteeinrichtung aufgeprägte Reaktionskraft, können zusammen eine Deformationskraft im Sinne der vorliegenden Erfindung bilden. Gleichermaßen kann auch eine Komponente einer bei der Bearbeitung auf das Bauteil wirkenden Kraft bereits eine Deformationskraft im Sinne der vorliegenden Erfindung bilden.

Erfindungsgemäß wird nun das Bauteil, ein das Bauteil bearbeitendes Werkzeug und/oder eine Halteeinrichtung zum Halten des Bauteils und/oder des Werkzeugs derart mit einem Fluid beaufschlagt, dass eine hierdurch aufgeprägte Fluidkraft auf das Bauteil, das Werkzeug bzw. die Halteeinrichtung einer Deformation des Bauteils durch die Deformationskraft entgegenwirkt.

Nach einem ersten Aspekt der vorliegenden Erfindung stützt das Fluid das Bauteil während der Bearbeitung ab. Dadurch kann eine Bereitstellung einer Vielzahl unterschiedlich geformter Adapter entfallen. Bevorzugt erfolgt die Fluidbeaufschlagung hierzu kontinuierlich oder im Wesentlichen kontinuierlich, vorzugsweise wenigstens während der Bearbeitung.

Durch die Fluidbeaufschlagung kann nach einem zweiten Aspekt der vorliegenden Erfindung auch eine Schwingung des Bauteils, eines Werkzeugs und/oder einer Bauteil- und/oder Werkzeug-Halteeinrichtung verringert, insbesondere aktiv oder passiv gedämpft, werden. Dabei kann eine passive Dämpfung insbesondere durch die vorstehend erläuterte, wenigstens im Wesentlichen kontinuierliche Fluidbeaufschlagung eingebracht werden, indem sich das Bauteil, Werkzeug bzw. die Halteeinrichtung quasi in dem dämpfenden Fluidstrahl nachgiebig abstützt. Eine aktive Dämpfung kann insbesondere dadurch erfolgen, dass die Fluidbeaufschlagung intermittierend, insbesondere periodisch und vorzugsweise gepulst erfolgt, vorzugsweise wiederum wenigstens während der Bearbeitung. Insbesondere nach dem zweiten Aspekt kann zusätzlich oder alternativ vorgesehen sein, dass die Fluidbeaufschlagung vor und/oder nach der Bearbeitung erfolgt, um beispielsweise Anregungen durch einen stoßartigen Werkzeugeingriff oder Restschwingungen nach einem Ende eines Werkzeugeingriffs entgegenzuwirken.

Die Fluidbeaufschlagung erfolgt vorzugsweise durch einen oder mehrere, insbesondere kontinuierliche oder intermittierende, Fluidstrahlen. Dabei kann insbesondere ein Austrittsbereich bzw. eine Austrittsposition einer Fluidzufuhr, insbesondere einer ein- oder mehrstrahligen Düse, ein Auftreffbereich, in dem ein oder mehrere Fluidstrahlen auf das Bauteil, ein Werkzeug und/oder eine Halteeinrichtung treffen, eine Richtung, eine Geschwindigkeit und/oder ein Massen- und/oder Volumenstrom eines oder mehrerer Fluidstrahlen entsprechend vorgegeben werden. Beispielsweise kann durch entsprechende Positionierung und Ausrichtung einer konstanten Fluiddüse relativ zum Bauteil, Werkzeug bzw. zur Halteeinrichtung und/oder durch Veränderung der Geometrie einer variablen Fluiddüse die Richtung und der Auftreffbereich vorgegeben werden, durch Einstellung eines das Fluid austreibenden Überdrucks und/oder eines den Fluidaustritt beeinflussenden Steuer- bzw. Regel-, insbesondere Drosselventils der Volumen- bzw. Massenstrom bzw. seine Geschwindigkeit. Damit kann die aufgeprägte Fluidkraft jeweils geeignet vorgegeben werden, so dass sie einer Deformation des Bauteils durch die Deformationskraft entgegenwirkt, insbesondere diese reduziert oder, wenigstens im Wesentlichen, verhindert. Insbesondere, wenn nach dem zweiten Aspekt die Fluidbeaufschlagung intermittierend, vorzugsweise periodisch und insbesondere gepulst erfolgt, kann durch ein entsprechendes Ventil oder eine andere Steuerung der Fluidzufuhr eine Frequenz, Amplitude und/oder Pulsdauer der Fluidbeaufschlagung auf eine zu dämpfende Schwingung abgestimmt werden.

Insbesondere, wenn nach dem ersten Aspekt das Bauteil durch das Fluid abgestützt wird, kann es vorteilhaft sein, wenn das Fluid das Bauteil, wenigstens im Wesentlichen, auf Höhe der Deformationskraft und parallel, vorzugsweise entgegengerichtet, zu dieser beaufschlagt. Häufig greift die Deformationskraft, der die Fluidkraft entgegenwirken soll, in einem Werkzeugeingriff zwischen Bauteil und dieses bearbeitendem Werkzeug an, so dass zusätzlich oder alternativ das Fluid das Bauteil, wenigstens im Wesentlichen, auf Höhe des Werkzeugeingriffs und parallel, vorzugsweise entgegengerichtet, zu diesem beaufschlagen kann.

Gleichermaßen können jedoch auch andere Beaufschlagungsbereiche und/oderrichtungen geeignet sein. So kann beispielsweise zur Reduzierung eine durch die Deformationskraft induzierten Biegung ein Bereich maximaler Auslenkung mit einer Fluidkraft beaufschlagt werden, die dieser Auslenkung entgegengerichtet ist. Gleiches gilt auch für eine Fluidbeaufschlagung des Werkzeugs und/oder einer Bauteil- bzw. Werkzeughalteeinrichtung. So kann es zweckmäßig sein, das Werkzeug auf Höhe und parallel zu einem Werkzeugeingriff mit der Fluidkraft zu beaufschlagung, oder auch in einem anderen Werkzeugbereich und/oder mit einer anderen Kraftrichtung.

Zusätzlich oder alternativ wird in einer bevorzugten Ausführung das Bauteil, das Werkzeug und/oder die Halteeinrichtung entsprechend der Deformationskraft und/oder einem Werkzeugeingriff zwischen Bauteil und dieses bearbeitendem Werkzeug beaufschlagt. Dabei kann die Fluidbeaufschlagung der Deformationskraft bzw. dem Werkzeugeingriff gleichermaßen in der Stärke, zeitlich und/oder räumlich, insbesondere in Position und/oder Orientierung, entsprechen, insbesondere hierzu proportional sein. So können beispielsweise eine oder mehrere Fluiddüsen zur Fluidbeaufschlagung derart gesteuert bzw. geregelt werden, dass die Stärke der Fluidbeaufschlagung, wenigstens im Wesentlichen, jeweils proportional zu der Deformationskraft ist, der entgegengewirkt werden soll. Zusätzlich oder alternativ kann die Position und/oder Orientierung der Fluiddüse(n) einer räumlich wandernden Deformationskraft nachgeführt werden. Weiter zusätzlich oder alternativ kann die Fluidbeaufschlagung zeitlich mit der Deformationskraft variieren, beispielsweise, wenn diese das Bauteil schwellend oder wechselnd belastet. Insbesondere, um nach dem zweiten Aspekt Schwingungen zu dämpfen, kann eine periodische Fluidbeaufschlagung mit variabler Amplitude und/oder Periode vorgegeben werden. Im Sinne einer Fourier-Analyse kann auch eine zusammengesetzte Schwingung verschiedener Frequenzen durch eine entsprechend mehrfach periodische Fluidbeaufschlagung, d.h. einer Überlagerung mehrerer periodischer Fluidbeaufschlagungen unterschiedlicher Frequenzen und/oder Phasen, reduziert werden.

Insbesondere zu einer der oben beschriebenen Vorgaben der Fluidbeaufschlagung entsprechend der Deformationskraft und/oder einem Werkzeugeingriff kann die Deformationskraft bzw. der Werkzeugeingriff während der Bearbeitung erfasst oder vorab, vorzugsweise durch Simulation, ermittelt werden. So kann beispielsweise bei der Planung einer spanenden Bearbeitung die dabei auftretende Deformationskraft in ihrem zeitlichen und örtlichen Verlauf sowie ihrer Größe vorab abgeschätzt und die Fluidbeaufschlagung entsprechend vorgegeben werden.

Insbesondere, wenn sich das Bauteil in dem Fluid abstützen soll, kann es vorteilhaft sein, wenn das Fluid das Bauteil auf einer dem Werkzeug abgewandten Seite beaufschlagt. Gleichermaßen kann es jedoch auch vorteilhaft sein, das Bauteil, das Werkzeug und/oder die Halteeinrichtung auf einer dem Werkzeug zugewandten Seite zu beaufschlagen, etwa in einem Schwingungsbauch, um Schwingungen zu reduzieren, oder einer schwellenden Deformationskraft eine gleichgerichtete Fluidkraft destruktiv interferierend zu überlagern. Insbesondere bei komplexen, mehrachsigen Belastungen kann zusätzlich oder alternativ auch eine zu diesen beiden Seiten verschiedenen Seite beaufschlagt werden, beispielsweise eine Stirn- und/oder Schmalseite eines flachen Balkens, der auf einer seiner Flachseiten bearbeitet wird.

Die vorliegende Erfindung ist insbesondere für eine mechanische Bearbeitung geeignet, vorzugsweise eine zerteilende und/oder trennende. Insbesondere kann sie bei einer spanenden Bearbeitung verwendet werden, bevorzugt mit geometrisch bestimmter Schneide wie zum Beispiel einem Fräsen oder Drehen.

Bei vielen, insbesondere mechanischen, Bauteilbearbeitungen ist bereits eine Kühl-und/oder Schmierstoffzufuhr vorgesehen. In einer bevorzugten Ausführung der vorliegenden Erfindung wird diese zur erfindungsgemäßen Fluidbeaufschlagung verwendet bzw. ein Kühl- und/oder Schmierstoff ("KSS") als Fluid verwendet, um eine Fluidkraft aufzuprägen, welche einer Deformation des Bauteils durch die Deformationskraft entgegenwirkt. Vorteilhaft treten damit keine prozessfremden Medien auf.

Eine Bearbeitungsvorrichtung, die zur Durchführung eines erfindungsgemäßen Verfahren eingerichtet ist, indem beispielsweise eine Fluidbeaufschlagungssteuer- bzw. -regeleinrichtung vorgesehen ist, um die Fluidbeaufschlagung vorzugeben, um eine Fluidkraft auf das Bauteil, das Werkzeug bzw. die Halteeinrichtung auszuüben, welche einer Deformation des Bauteils durch die Deformationskraft entgegenwirkt, und/oder indem eine Fluiddüse und eine Fluidzufuhr entsprechend eingerichtet sind, insbesondere eine Fluiddüse entsprechend positioniert und ausgerichtet und ein Fluidmassenstrom eingestellt ist, kann beispielsweise eine Drehbank, eine Fräsmaschine oder dergleichen sein.

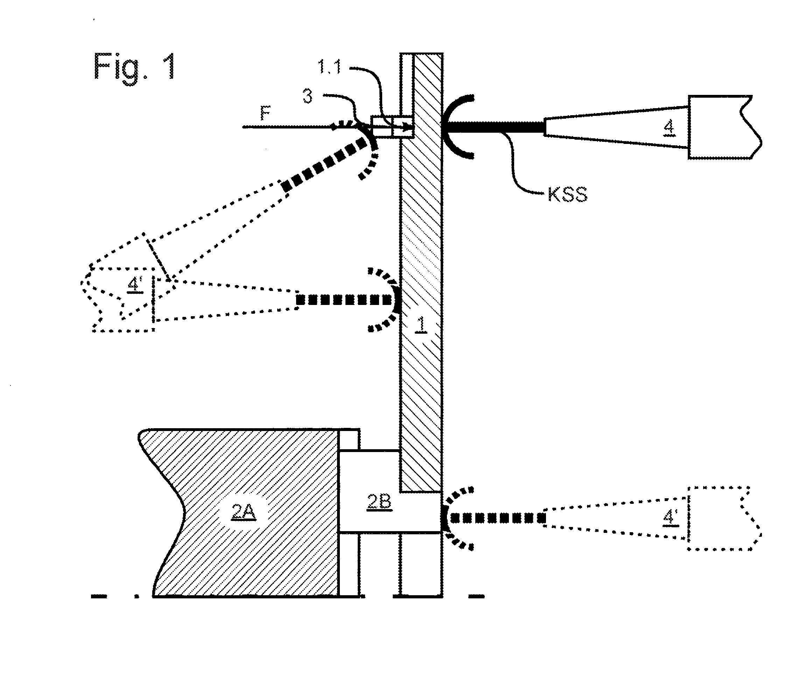

Weitere Vorteile und Merkmale ergeben sich aus den Unteransprüchen und den Ausführungsbeispielen. Hierzu zeigt, teilweise schematisiert, die einzige
- Fig. 1:: eine Bearbeitung eines Bauteils mit einer Vorrichtung nach einer Ausführung der vorliegenden Erfindung im Querschnitt.

Fig. 1 zeigt im Querschnitt längs einer strichpunktierten Rotationsachse ein Bauteil 1, hier exemplarisch eine Laufschaufel eines Flugtriebwerks, das bzw. die durch Backen 2B eines Spannfutters 2A einer Drehbank gehalten wird. Spannfutter 2A und Backen 2B bilden zusammen eine Halteeinrichtung zum Halten des Bauteils 1.

Das Bauteil 1 wird durch eine Schneide eines Drehstahls 3 im Werkzeugeingriff 1. 1 spanend bearbeitet. Hierdurch wirkt neben den Schnittkräften insbesondere eine in Fig. 1 horizontale Deformationskraft F, die das Bauteil 1 in Fig. 1 nach rechts zu biegen sucht.

Gemäß einer ausgezogen dargestellten Ausführung der vorliegenden Erfindung wird das Bauteil 1 während der Bearbeitung auf der dem Werkzeug abgewandten Seite auf Höhe des Werkzeugeingriffs 1.1 parallel entgegengerichtet zu der Deformationskraft F kontinuierlich mit einem Kühl- und Schmierstoff KSS derart beaufschlagt, dass die hierdurch auf das Bauteil 1 aufgeprägte Fluidkraft dieser Deformation des Bauteils durch die Deformationskraft F entgegenwirkt. Austritts- und Auftreffbereich, Richtung, Geschwindigkeit und Massenstrom des Fluids KSS sind entsprechend der Deformationskraft F vorgegeben, die vorab ermittelt und/oder während des Betriebs, beispielsweise durch Dehnmessstreifen (nicht dargestellt) an Bauteil 1 oder Werkzeug 3, erfasst wird.

Zusätzlich oder alternativ können andere Fluidbeaufschlagungen erfolgen, von denen in Fig. 1 exemplarisch drei punktiert angedeutet sind. So kann beispielsweise die Bauteilhalterung 2B beaufschlagt werden, um Reaktionskräften auf die Deformationskraft F entgegenzuwirken und so die Bauteileinspannung zu stabilisieren. Zusätzlich oder alternativ kann der Drehstahl 3 beaufschlagt werden, in Fig. 1 exemplarisch auf der dem Werkzeug 3 zugewandten Seite des Bauteils 1 nicht-parallel zur Deformationskraft F. Insbesondere, um Schwingungen in einer Eigenform zu dämpfen, die radial auf halber Höhe zwischen Werkzeugeingriff und Bauteileinspannung einen Schwingungsbauch aufweist, kann auch das Bauetil in diesem vom Werkzeugeingriff verschiedenen Bereich parallel gleichgerichtet zu der Deformationskraft F periodisch mit der entsprechenden Eigenfrequenz beaufschlagt werden.

Zur Fluidbeaufschlagung ist eine Fluidbeaufschlagungseinrichtung, im Ausführungsbeispiel in Form einer einstrahligen Düse 4 bzw. 4', entsprechend eingerichtet, insbesondere entsprechend positioniert und ausgerichtet, wobei der Massenstrom des Fluids KSS durch ein Steuerventil (nicht dargestellt) entsprechend eingestellt wird. Die Öffnung des Ventils kann zur zeitlich variablen Vorgabe der Fluidbeaufschlagung verändert werden, die Position und Ausrichtung der Düse 4 zur örtlich variablen Vorgabe. Insbesondere kann die Düse 4 dem Werkzeugeingriff entsprechend erfolgen und diesem hierzu örtlich nachgeführt werden (in Fig. 1 vertikal nach unten).

### Bezugszeichenliste

- 1: Laufschaufel (Bauteil)
- 1.1: Werkzeugeingriff
- 2A: Spannfutter (Halteeinrichtung)
- 2B: Backen (Halteeinrichtung)
- 3: Drehstahl (Werkzeug)
- 4; 4': Düse (Fluidbeaufschlagungseinrichtung)

## Patentansprüche

1. Verfahren zur Bearbeitung eines Bauteils (1), insbesondere einer Turbomaschine, wobei durch die Bearbeitung eine Deformationskraft (F) auf das Bauteil ausgeübt wird, und wobei das Bauteil, ein das Bauteil bearbeitendes Werkzeug (3) und/oder eine Halteeinrichtung (2A, 2B) zum Halten des Bauteils (1) und/oder des Werkzeugs mit einem Fluid (KSS) beaufschlagt wird,
wobei
diese Fluidbeaufschlagung vorgegeben wird, um eine Fluidkraft auf das Bauteil, das Werkzeug bzw. die Halteeinrichtung auszuüben, welche einer Deformation des Bauteils durch die Deformationskraft entgegenwirkt.

2. Verfahren nach Anspruch 1, **dadurch gekennzeichnet, dass** zur Vorgabe der Fluidbeaufschlagung ein Austritts- und/oder Auftreffbereich, eine Richtung, eine Geschwindigkeit und/oder ein Massen- und/oder Volumenstrom des Fluids vorgegeben wird.

3. Verfahren nach einem der vorhergehenden Ansprüche, **dadurch gekennzeichnet, dass** die Fluidbeaufschlagung, wenigstens im Wesentlichen, kontinuierlich oder intermittierend, insbesondere periodisch, vorgegeben wird.

4. Verfahren nach Anspruch 3, **dadurch gekennzeichnet, dass** eine, insbesondere variabel oder mehrfach, periodische Fluidbeaufschlagung vorgegeben wird, um einer Schwingung des Bauteils durch die Deformationskraft entgegenzuwirken.

5. Verfahren nach einem der vorhergehenden Ansprüche, **dadurch gekennzeichnet, dass** die Fluidbeaufschlagung vor, während und/oder nach der Bearbeitung erfolgt.

6. Verfahren nach einem der vorhergehenden Ansprüche, **dadurch gekennzeichnet, dass** das Fluid das Bauteil, das Werkzeug bzw. die Halteeinrichtung, wenigstens im Wesentlichen, auf Höhe, parallel zu und/oder entsprechend der Deformationskraft und/oder eines bzw. einem Werkzeugeingriffs (1.1) zwischen Bauteil und dieses bearbeitendem Werkzeug beaufschlagt.

7. Verfahren nach einem der vorhergehenden Ansprüche, **dadurch gekennzeichnet, dass** das Fluid das Bauteil, das Werkzeug bzw. die Halteeinrichtung auf einer dem Werkzeug zugewandten, einer dem Werkzeug abgewandten Seite und/oder einer zu diesen beiden Seiten verschiedenen Seite beaufschlagt.

8. Verfahren nach einem der vorhergehenden Ansprüche, **dadurch gekennzeichnet, dass** das Bauteil mechanisch, insbesondere trennend, vorzugsweise spanend, insbesondere mit geometrisch bestimmter Schneide, und/oder zerteilend, bearbeitet wird.

9. Verfahren nach einem der vorhergehenden Ansprüche, **dadurch gekennzeichnet, dass** das Fluid ein Kühl- und/oder Schmierstoff (KSS) der Bearbeitung umfasst, insbesondere ist.

## Claims

1. Method for processing a component (1), in particular a turbomachine, wherein a deformation force (F) is exerted on the component by the processing, and wherein a fluid (KSS) is applied to the component, a tool (3) processing the component, and/or a holding device (2A, 2B) for holding the component (1) and/or the tool, wherein this fluid-application is predetermined in order to exert a fluid force on the component, the tool or the holding device respectively that counteracts deformation of the component by the deformation force.

2. Method according to claim 1, **characterised in that** in order to predetermine the fluid-application an exit and/or impingement region, a direction, a velocity and/or a mass and/or volume flow of the fluid are/is predetermined.

3. Method according to one of the preceding claims, **characterised in that** the fluid-application is predetermined, at least substantially, continuously or intermittently, in particular periodically.

4. Method according to claim 3, **characterised in that** a fluid-application that is periodic, in particular variably or repeatedly, is predetermined in order to counteract a vibration of the component as a result of the deformation force.

5. Method according to one of the preceding claims, **characterised in that** the fluid-application is effected prior to, during and/or after the processing.

6. Method according to one of the preceding claims, **characterised in that** the fluid is applied to the component, the tool or the holding device respectively, at least substantially, at the level of, parallel to and/or in accordance with the deformation force and/or a tool-engagement (1.1) between the component and the tool processing the latter.

7. Method according to one of the preceding claims, **characterised in that** the fluid is applied to the component, the tool or the holding device respectively on a side facing the tool, a side remote from the tool and/or a side that is different from these two sides.

8. Method according to one of the preceding claims, **characterised in that** the component is processed mechanically, in particular in a separating manner, preferably in a machining manner, in particular with a geometrically determined cutter, and/or in a dividing manner.

9. Method according to one of the preceding claims, **characterised in that** the fluid comprises, in particular is, a coolant and/or lubricant (KSS) pertaining to the processing.

## Revendications

1. Procédé d'usinage d'un élément structurel (1), en particulier d'une turbomachine, dans lequel, du fait de l'usinage, une force de déformation (F) est exercée sur l'élément structurel, et dans lequel l'élément structurel, un outil (3) usinant l'élément structurel et/ou un dispositif de maintien (2A, 2B) pour le maintien de l'élément structurel (1) et/ou de l'outil sont exposés à un fluide (KSS),
dans lequel
cette exposition à un fluide est prédéfinie afin d'exercer une force de fluide sur l'élément structurel, l'outil ou le dispositif de maintien, laquelle exposition permet de lutter contre une déformation de l'élément structurel due à la force de déformation.

2. Procédé selon la revendication 1, **caractérisé en ce qu'**une zone de sortie et/ou d'impact, une direction, une vitesse et/ou un flux massique et/ou volumique du fluide sont prédéfinis afin de spécifier l'exposition au fluide.

3. Procédé selon l'une quelconque des revendications précédentes, **caractérisé en ce que** l'exposition au fluide spécifiée est, au moins pour l'essentiel, continue ou intermittente, en particulier périodique.

4. Procédé selon la revendication 3, **caractérisé en ce qu'**on prédéfinit une exposition au fluide périodique, en particulier variable ou multiple, afin de lutter contre une vibration de l'élément structurel due à la force de déformation.

5. Procédé selon l'une quelconque des revendications précédentes, **caractérisé en ce que** l'exposition au fluide a lieu avant, pendant et/ou après l'usinage.

6. Procédé selon l'une quelconque des revendications précédentes, **caractérisé en ce que** le fluide impacte l'élément structurel, l'outil ou le dispositif de maintien, au moins pour l'essentiel, à hauteur de, parallèlement et/ou conformément à la force de déformation et/ou à l'attaque d'un outil (1.1) entre l'élément structurel et cet outil à usiner.

7. Procédé selon l'une quelconque des revendications précédentes, **caractérisé en ce que** le fluide impacte l'élément structurel, l'outil ou le dispositif de maintien sur un côté dirigé vers l'outil, opposé à l'outil et/ou sur un côté différent de ces deux côtés.

8. Procédé selon l'une quelconque des revendications précédentes, **caractérisé en ce que** l'élément structurel est usiné mécaniquement, en particulier par séparation, de préférence par enlèvement de matière, en particulier avec une lame à géométrie définie, et/ou par division.

9. Procédé selon l'une quelconque des revendications précédentes, **caractérisé en ce que** le fluide comprend un fluide de refroidissement et/ou lubrifiant (KKS) de l'usinage, en particulier est un fluide de refroidissement et/ou lubrifiant.
